# EUROPEAN PATENT SPECIFICATION

(11) **EP 0 486 420 B1**
(45) Date of publication and mention of the grant of the patent: **06.09.1995**
(21) Application number: 91610089.4
(22) Date of filing: 11.11.1991
(51) Int. Cl.: B23K 9/32

(54) **Device for hindgas coverage in tube welding**
Vorrichtung zur Schutzgasabdeckung beim Lichtbogenschweissen
Dispositif pour fournir une atmosphère de gas inerte dans le soudage à l'arc

(30) Priority: 13.11.1990 US 612268
(43) Date of publication of application: 20.05.1992
(60) Divisional application: 93203497.8
(73) Proprietor: Schnorrer, Walter, DK-9000 Aalborg (DK)
(72) Inventor: Schnorrer, Walter, DK-9000 Aalborg (DK)
(74) Representative: Larsen, Hans Ole

(56) References cited:
- DE-U- 8 628 587
- GB-A- 1 138 685
- US-A- 3 194 466

## Description

The invention concerns a device for hindgas coverage in welding substantially cylindrical work pieces, especially tube pieces. The device comprises a first and a second part and a means for connecting the two parts, that comprise a first and a second group of annular resilient sealing means mounted on each of a first and a second body, respectively, where the sealing means are directed radially in relation to a longitudinally axis of the device and so as to provide an enclosure of an inner space in a work piece or of two work pieces abutted together. The device further comprises supply duct means for providing protective gas coverage in said inner enclosure, and the device is provided with several discharge duct means for the exit of the protective gas, the discharge duct means having a length that is between six and thirty times their inner diameter and being substantially evenly distributed over the region between the sealing means and the second body or in or on the second body.

Such a device is disclosed in US patent 2,966,576. According to this document there is provided supply ducts and discharge ducts in each of the parts. Two ducts are shown in each part in the drawing. The length of the discharge ducts is approximately 22 times their inner diameter when measured on the drawing, though no indication of the the diameter-to-length ratio is found in the description. The sealing means consist of inflatable flexible sleeves on each part, and pressurized gas for inflating the sealing means is conducted through a central duct in both parts, where the central duct is also interconnecting the parts. The sealing means requires a pressurized gas supply and external tube connections, and preparations for connecting these means to the device are necessary before welding is initiated. Furthermore, the protective gas is introduced to the enclosure during welding through distinct holes, possibly only two holes.

Another related device is disclosed in GB A 2 201 623. According to this teaching the device consists of mainly two disc-shaped web parts, with supply duct means in one web part and discharge ducts in both web part. When purging the enclosure atmospheric air in the enclosure may take different directions to escape through the discharge ducts. In the embodiment shown in this publication only one discharge duct is shown in a web part, and this duct has a diameter-to-length ratio of about 1:3. The rather large diameter-to-length ratio of the discharge duct poses a risk for injection effects, i.e. the out-flowing gas draws the ambient atmosphere into the enclosure.

In order to ensure removal of atmospheric oxygen below the critical level of 25 ppm of oxygen content where oxidation of the welding seam is negligible, the known devices are not sufficient or, at least, the time for purging the enclosure is fairly long, as atmospheric air may "hide" in the corners of the enclosure, or the protective gas is mixed up with atmospheric air because of turbulence caused by the non-linear flow from supply duct to discharge duct.

EP A1 348,125 discloses an embodiment of a device for hindgas coverage with discharge outlets consisting of one or more long, narrow ducts. The said publication, however, does not discuss the problems of controlled outflow of gases from the enclosure and there is no description of dimensions of the ducts.

### EXPLANATION OF THE INVENTION

According to the invention there is provided a device of the kind indicated in the above introduction, where the sealing means consist of at least two pieces of plate material of uniform thickness, said sealing means being fixed and kept apart in a substantially mutually parallel position in each body. One end of the supply duct means is surrounded by an outlet designed to conduct protective gas to an annular distribution chamber delimited by the first body and an annular disc-shaped diffusor facing the second body. A first discharge duct means is provided centrally in the second body and other discharge duct means are evenly distributed in the second body and at a distance from the first discharge duct means. The discharge duct means have an inner diameter in the range of one to five, preferably two to four, millimetres, and preferably a length in the range of ten to twenty times their inner diameter.

Thus it is possible to attain a controlled outflow of the gases in the enclosure provided by the device according to the invention. The several discharge ducts enhance a relatively slow, even flow from the supply duct means towards the discharge ducts. The dimensions of the ducts ensures that injection effects do not occur without inducing too much fluid friction because of duct dimensions.

In order to avoid leaks between sealing means and the tube wall some of the surfaces of each part to abut on the said pieces have a two-dimensional curvature, according to claim 2. The slightly bowl-shaped curvature may compensate for deviations of centreline of the device from the cylinder axis of the tube piece.

In order to keep the sealing means in touch with the tube wall when using the device close to or in a bend in the tube, the said second part may comprise self-aligning means situated on the side facing away from the first part for the positioning of the second part in relation to the centre axis of a surrounding work piece section.

A preferred embodiment of the self-aligning means indicated in claim 4.

### THE DRAWING

Embodiments of the invention will now be described with reference to the drawing, where:
fig. 1 shows an axial section of two tube ends to be welded together applying a first embodiment of a device for hindgas coverage according to the invention,
fig. 2 shows another embodiment of the second web part,
fig. 3 shows an axial section of a tube end and a tube bend being welded together applying the device for hindgas coverage according to the invention,
fig. 4 shows a partial section of a second embodiment of the invention and for tubes with a large inner diameter, and
fig. 5 shows on a larger scale a section on the line V-V in fig. 4.

### DESCRIPTION OF THE EMBODIMENTS

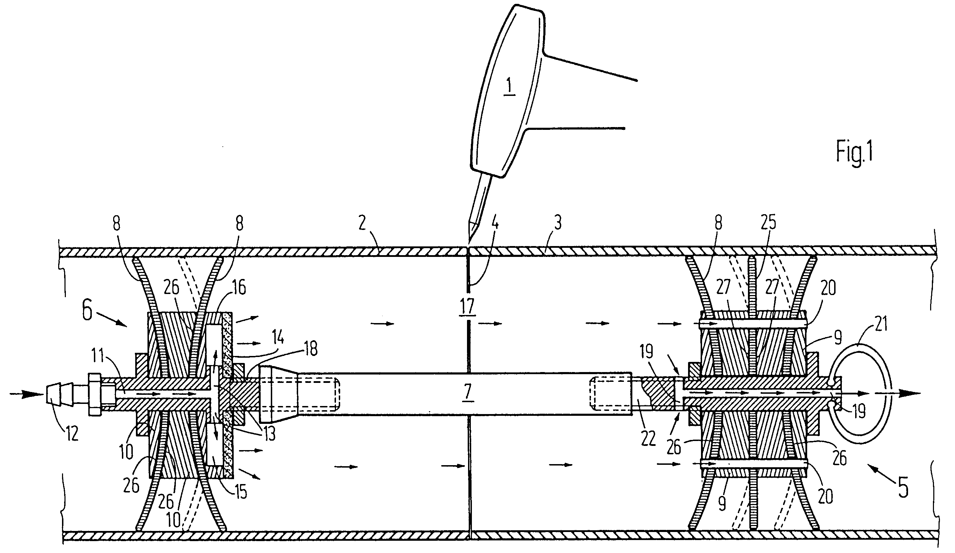

In fig. 1 the reference number 1 refers to a welding tool such as a TIG-welding handle for arc welding with protective gas, in that the tube ends 2 and 3 are to be welded together with a welding seam 4. In order for the back of the welding seam 4 also to be permanently covered by protective gas, there is provided a device for hindgas coverage according to the invention where two sealing devices 5 and 6 connected by connecting means are provided inside the tube pieces 2,3, the connecting means consisting of an inflexible or resilient rod 7 being screwed onto the sealing devices 5 and 6. Between the sealing devices a enclosure 17 to be flushed by a protective gas (hindgas) as argon which will displace oxygen-containing atmospheric air in the enclosure 17. In the presence of virtual oxygen-free gas oxidation of the welding area's root side is avoided.

Each sealing device 5,6 comprises a number of sealing members 8,25 each consisting of 1 - 3 mm thick annular rubber discs having a uniform thickness and being of for instance silicone rubber or a similar resilient material which will stand heating to a temperature of 200^{o}C. The annular discs of rubber are circular rings punched of rubber plate which permits the production of sealing means in many different sizes in a quick and inexpensive manner.

The sealing means 8,25 has a diameter slightly larger than the inner diameter of the tube, and the number applied in each sealing device is decided according to requirements; however, at least two sealing means per sealing device 5,6 are used. The more sealing means each sealing device 5,6 has, the less the tendency is to capsize, and the better the obtained tightness is. Further sealing means 8, 25 are therefore also functioning as self-aligning means.

The sealing means 8,25 is secured by means of web parts 9,10 being for instance annular discs of metal or plastic, having plane surfaces 27 and two-dimensional curvature surfaces 26, the latter forming a two-dimensional curvature or slightly bowl-shape on the sealing means 8. The web parts 9, 10 hold the sealing means 8, 25 as shown, i.e. in such a manner that at least some of the sealing means 8 are held curved and so that the sealing means 25 remain plane. The sealing means 8, 25 protrude approximately 10-30 mm beyond the web part 9, 10. The web parts 9, 10 are secured to a first web part 10 and a second web part 9 by means of fittings containing a supply duct 11 and a discharge duct 19.

The supply duct 11 is fitted with the first web part 10 and is provided with a pipe branch 12 on to the one end of which a supply tube (not shown) for protective gas can be fitted, and where the other end is surrounded by an outlet 13 conducting the gas to an annular distribution chamber 15. The chamber 15 is delimited by an annular disc-shaped diffusor 14 of sinter metal or a similar porous material and a web part 10 having an annular boss or edge 16. Gas is hereby supplied to the enclosure 17 without turbulence and substantially distributed across the one end wall of the enclosure 17. The supply duct 11 has an extension 18 with a thread for attachment of the connecting means 7, e.g. a metal tube or a tube of helical wound metal strips.

The second web part 9 is secured to the discharge duct 19 ending in a drawring 21. In the extension 22 of the discharge duct 19 a thread or the like may be provided for attachment with the connecting means 7. In the second web part 9 there are furthermore axial discharge ducts 20, for instance four ducts spaced evenly and at a uniform distance from the central duct 19. The width in the clear of the discharge ducts 19, 20 is in the range of 1-5 mm, preferably 2-4 mm, and the length of the ducts is 6-30 times their inner diameter, preferably 10-20 times. This ensures a suitable flow resistance permitting an even flow in the enclosure 17 and thus preventing air from entering back through the discharge ducts due to injection effects. The number of discharge ducts 19, 20 is chosen under consideration of the required gas flow.

The sealing devices 5, 6 are inserted in the tube by pulling the drawring 21 and are removed by pulling the pipe branch 12, for instance by means of the gas supply tube (not shown) when the welding seam 4 is finished.

The sealing means 8, 25 and the web parts 9, 10 are secured to the sealing devices 5, 6 by the use of suitable assembly means, such as nuts being screwed on to the supply duct 11 and the discharge duct 19, or by way of retaining means provided on these parts. It must be ensured, however, that the diffusor disc 14 is not exposed to bending strain since such sinter materials are fairly easily destroyed.

The flow of the protective gas through the hindgas device is indicated by small arrows in fig. 1. While using the described embodiment in a tube having an inner diameter of about 76 mm, a gas flow of 10 litres per minute in 1-2 minutes is sufficient to remove atmospheric air to a sufficient degree before welding.

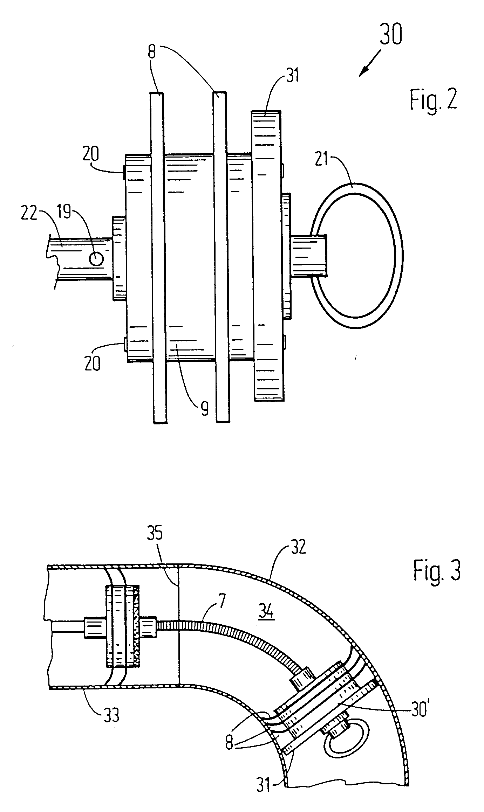

Fig. 2 shows a sealing device 30 being a second embodiment of the second web part 9 but provided with self-aligning means by way of an inflexible disc, such as a metal disc 31.

Fig. 3 shows how the sealing device 30' has a self-aligning effect due to the self-aligning means 31 although it is arranged in a tube bend piece 32 which is to be welded to a straight tube piece 33 by an annular welding seam 35. The welding seam 35 is positioned between the sealing devices 6 and 30' and is thereby contained in an enclosure 34 to be purged by protective gas. In this embodiment the sealing device 30' has three sealing means 8 and a self-aligning disc 31, whereby the sealing device is positioned correctly and closes the tube bend.

The self-aligning means 31 has a diameter of between .80 and .99 times the inner diameter of the tubes.

The embodiments shown in figs. 1-3 are applicable when welding together tubes of an inner diameter of 30-300 mm.

If the diameter of the tube workpieces exceeds 300 mm, the same sealing devices may be applied, but the size of the enclosures 17, 34 will be correspondingly larger thereby causing an unnecessary large consumption of expensive gas as argon.

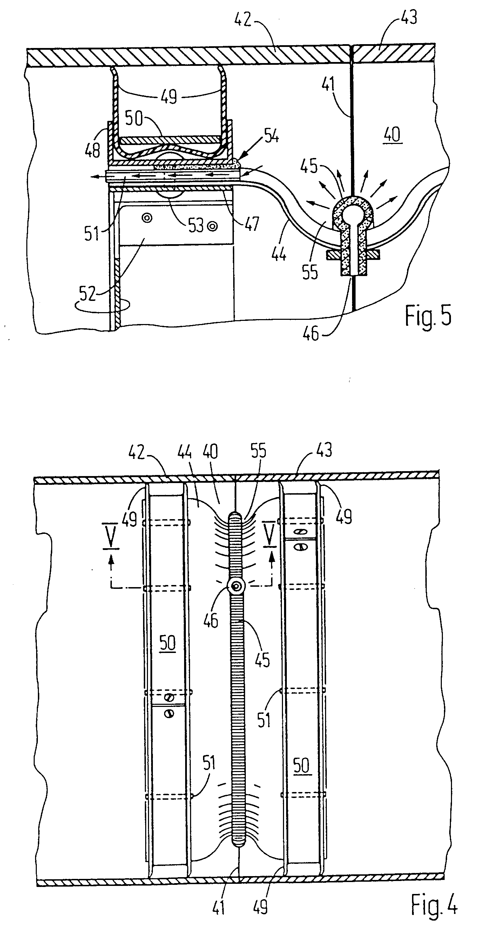

In connection with annular weldings of tube pieces having an inner diameter above 300 mm, the embodiment shown in figs. 4-5 is therefore preferably used. This embodiment may, however, also to som extent be used with diameters less than 300 mm.

According to this embodiment an annular enclosure 40 for protective gas is obtained which can be produced with a small volume but still in such a manner that the main part of the gas is found near the welding seam 41. The hindgas device comprises two sealing devices 49, one on each side of the welding seam 41 between the two tube pieces 42, 43 which are to be welded together. Each sealing device 49 is long, narrow piece of plate material welded together at the ends thus forming an annular item of rubber plate of uniform thickness and of heat-resistant type, e.g. silicone rubber. Each item is pressed into a U-shaped support member 48 while fastening it, whereby the limbs of the U point radially outwards, see fig. 5. The outer edge of these is in sealing contact with the inner wall of the tube pieces 42, 43.

In order to secure the sealing device 49 in such a manner that it can also be replaced, an annular strap 50 is used which also reinforces the tightening between the annular web member 44 and the annular fastening device 48.

The web part in this embodiment consists of an annular web member 44 of thin stainless steel plate and corrugated axially. The web member 44 resembling a pair of bellows is enclosed between the annular fastening device 48 and a likewise annular support part 47 which may be supported by radial arms 52 or the like. Holding together of the parts is effected by rivets 53. The advantage of the corrugated material is that it is easily shaped cylindrically as shown.

In the assembly area between the annular support part 47 and the annular fastening device 48 there is provided a number of discharge ducts 51, for instance eighteen discharge ducts 51 distributed around the periphery. Due to the corrugated shape of the annular web member 44, the discharge ducts 51 are easily fitted here in the assembly area which is sealed by silicone rubber 54 or the like. The dimensions of the discharge ducts 51 are substantially the same as those of the discharge ducts 20 shown in fig. 1.

For the supply of hindgas a T-shaped inlet pipe 46 is provided which is connected to an annular tubular diffusor 45 such as a perforated tube or a metal tube with spaced leaks, such as a helical metal strip tube. The diffusor 45 is arranged in an annular groove 55, Cf. figs. 4 and 5, so that the width of the clear of the enclosure 40 can be held as small as possible, whereas the hindgas is still supplied into the area right below the welding seam 41 and out through the discharge ducts 51. Arrows in fig. 5 indicate the flow direction of the hindgas.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A device for hindgas coverage in welding substantially cylindrical work pieces (2,3), especially tube pieces, the device comprising a first and a second part (5 and 6) and a means (7) for connecting the two parts (5,6), that comprise a first and a second group of annular resilient sealing means (8,25) mounted on each of a first and a second body (10 and 9), respectively, where the sealing means (8,25) are directed radially in relation to a longitudinally axis of the device and so as to provide an enclosure (17) of an inner space in a substantially cylindrical work piece or in two substantially cylindrical work pieces (2,3) abutted together, the device further comprising supply duct means (11,13) for providing protective gas coverage in said inner enclosure (17), and the device being provided with several discharge duct means (19,20) for the exit of the protective gas, the discharge duct means (19,20) having a length that is between six and thirty times their inner diameter and being substantially evenly distributed over the region between the sealing means (8,25) and the second body (9) or in or on the second body (9), **characterized** in that the sealing means (8,25) consist of at least two pieces of plate material of uniform thickness, said sealing means (8,25) being fixed and kept apart in a substantially mutually parallel position in each body (9,10), and that one end of the supply duct means (11) is surrounded by an outlet (13) designed to conduct protective gas to an annular distribution chamber (15) delimited by the first body (10) and an annular disc-shaped diffusor (14) facing the second body (10), and that a first discharge duct means (19) is provided centrally in the second body (10) and other discharge duct means (20) are evenly distributed in the second body and at a distance from the first discharge duct means (19), the discharge duct means (19,20) having an inner diameter in the range of one to five, preferably two to four, millimetres, and preferably a length in the range of ten to twenty times their inner diameter.

2. A device according to claim 1, wherein some of the surfaces of each body (9,10) to abut on the said pieces (8) have a two-dimensional curvature.

3. A device according to one of the claims 1 or 2 , wherein the said second part (5) comprises self-aligning means (31) situated on the side facing away from the first part (6) for the positioning of the second part (5) in relation to the centre axis of a surrounding work piece (2,3) section.

4. A device according to claim 3, wherein the self-aligning means consists of a disc-shaped piece (31) of inflexible material having a diameter in the range of .80 to .99 times the inner diameter of the workpiece section (2,3).

## Patentansprüche

1. Vorrichtung zur Rückgasabdeckung beim Schweißen von im wesentlichen zylindrischen Werkstücken (2, 3), insbesondere Rohrstücken, wobei die Vorrichtung ein erstes und ein zweites Teil (5 und 6) sowie eine Einrichtung (7) zum Verbinden der beiden Teile (5, 6) umfaßt, die eine erste und eine zweite Gruppe von kreisringförmigen elastischen Abdichteinrichtungen (8, 25) aufweisen, die auf einem ersten bzw. einem zweiten Körper (10 und 9) angeordnet sind, wobei die Abdichteinrichtungen (8, 25) relativ zur Längsachse der Vorrichtung radial verlaufen und die Umhüllung (17) eines Innenraumes in einem im wesentlichen zylindrischen Werkstück oder in zwei aneinanderstoßenden, im wesentlichen zylindrischen Werkstücken (2, 3) bilden, und wobei die Vorrichtung des weiteren eine Zuleitungseinrichtung (11, 13) für eine Schutzgasabdeckung in der inneren Umhüllung (17) umfaßt und mit mehreren Ableitungseinrichtungen (19, 20) für das Herausführen des Schutzgases versehen ist, wobei die Ableitungseinrichtungen (19, 20) eine Länge haben, die das sechs- bis dreißigfache ihres Innendurchmessers beträgt sowie im wesentlichen gleichmäßig über den Bereich zwischen der Abdichteinrichtung (8, 25) und dem zweiten Körper (9) oder im oder am zweiten Körper (9) verteilt sind, dadurch **gekennzeichnet**, daß die Abdichteinrichtungen (8, 25) aus wenigstens zwei Stücken eines plattenförmigen Materiales mit gleichmäßiger Dicke bestehen, daß die Abdichteinrichtungen (8, 25) an jedem Körper (9, 10) befestigt sind und dort in im wesentlichen gegenseitig paralleler Stellung in einem Abstand voneinander gehalten werden, daß ein Ende der Zuleitungseinrichtung (11) von einem Auslaß (13) umgeben ist, der dafür vorgesehen ist, Schutzgas zu einer kreisringförmigen Verteilkammer (15) zu leiten, die vom ersten Körper (10) und einem kreisringförmigen, scheibenförmigen Diffusor (14) begrenzt ist, der dem zweiten Körper (10) gegenüberliegt, und daß mittig im zweiten Körper (10) eine erste Ableitungseinrichtung (19) vorgesehen ist und weitere Ableitungseinrichtungen (20) in einem Abstand von der ersten Ableitungseinrichtung (19) gleichmäßig über den zweiten Körper verteilt sind, wobei die Ableitungseinrichtungen (19, 20) einen Innendurchmesser im Bereich von einem bis fünf, vorzugsweise zwei bis vier Millimetern haben und vorzugsweise eine Länge im Bereich vom zehn- bis zwanzigfachen ihres Innendurchmessers.

2. Vorrichtung nach Anspruch 1, wobei einige der Oberflächen der Körper (9, 10), die an die genannten Stücke (8) angrenzen, eine zweidimensionale Krümmung besitzen.

3. Vorrichtung nach einem der Ansprüche 1 oder 2, wobei das zweite Teil (5) eine selbstausrichtende Einrichtung (31) aufweist, die sich an der Seite befindet, die vom ersten Teil (6) weg gerichtet ist, um das zweite Teil (5) bezüglich der Mittelachse des umgebenden Werkstückabschnittes (2, 3) zu positionieren.

4. Vorrichtung nach Anspruch 3, wobei die selbstausrichtende Einrichtung aus einem scheibenförmigen Stück (31) nicht flexiblen Materials mit einem Durchmesser im Bereich vom 0,80- bis 0,99-fachen des Innendurchmessers des Werkstückabschnittes (2, 3) besteht.

## Revendications

1. Dispositif de couverture par gaz protecteur utilisé pour la soudure de pièces sensiblement cylindriques (2, 3), particulièrement les pièces tubulaires, le dispositif comprenant une première et une seconde partie (5, 6) et des moyens (7) pour connecter les deux parties (5, 6), qui comprennent un premier et un second groupe de moyens de soudure annulaires et résistants au choc (8, 25) montés respectivement sur un premier et un second corps (10 et 9), où les moyens de soudure (8, 25) sont dirigés radialement relativement à un axe longitudinal du dispositif et de façon à former une enceinte (17) d'un volume interne dans une pièce de travail sensiblement cylindrique ou dans deux pièces de travail sensiblement cylindriques (2, 3) s'appuyant l'une sur l'autre, le dispositif comprenant en outre des moyens de canalisation d'alimentation (11, 13) pour procurer une couverture par gaz protecteur dans ladite enceinte interne (17), et le dispositif étant équipé de plusieurs moyens de canalisation de décharge (19, 20) pour la sortie du gaz protecteur, les moyens de canalisation de décharge (19, 20) ayant une longueur qui est comprise entre six et trente fois leur diamètre interne et étant sensiblement distribués régulièrement au-dessus de la région entre les moyens de soudure (8, 25) et le second corps (9) ou sur ou dans le second corps (9), caractérisé en ce que les moyens de soudure (8, 25) consistent en au moins deux pièces de matériau en forme de plaque d'épaisseur uniforme, lesdits moyens de soudure (8, 25) étant fixés et maintenus à part dans une position sensiblement parallèle mutuellement dans chaque corps (9, 10), et en ce que une extrémité des moyens de canalisation d'alimentation (11) est entourée par un orifice de décharge (13) conçu pour acheminer le gaz de protection à une chambre de distribution annulaire (15) délimitée par le premier corps (10) et un diffuseur en forme de disque annulaire (14) en face du second corps (10), et en ce qu'un premier moyen de canalisation de décharge (19) est prévu en position centrale dans le second corps (10) et d'autres moyens de canalisation de décharge (20) sont régulièrement distribués dans le second corps et à distance du premier moyen de canalisation de décharge (19), les moyens de canalisation de décharge (19, 20) ayant un diamètre interne compris dans un intervalle de un à cinq millimètres, de préférence deux à quatre millimètres, et de préférence une longueur comprise dans un intervalle de dix à vingt fois leur diamètre interne.

2. Dispositif selon la revendication 1, dans lequel quelques unes des surfaces de chaque corps (9, 10) destinées à s'appuyer sur lesdites pièces (8) ont une courbure bidimensionnelle.

3. Dispositif selon l'une des revendications 1 et 2, dans lequel ladite seconde partie (5) comprend des moyens d'auto-alignement (31) situés sur la face en regard de la première partie (6) pour le positionnement de la seconde partie (5) relativement à l'axe central d'un élément d'une pièce de environnante (2,3).

4. Dispositif selon la revendication 3, dans lequel les moyens d'auto-alignement consistent en une pièce en forme de disque (31) en matériau non flexible ayant un diamètre compris dans un intervalle de 0,80 à 0,99 fois le diamètre interne de l'élément de pièce (2, 3).
